# EUROPEAN PATENT APPLICATION

(11) **EP 3 444 750 A1**
(43) Date of publication of application: **20.02.2019**
(21) Application number: 18183730.3
(22) Date of filing: 16.07.2018
(51) Int. Cl.: G06K 9/00, G08B 13/196, H04N 7/18

(54) **CLOUD BASED SYSTEMS AND METHODS FOR LOCATING A PEACE BREAKER**

(30) Priority: 18.08.2017 US 201715680513
(71) Applicant: Honeywell International Inc., Morris Plains, NJ New Jersey 07950 (US)
(72) Inventor: ZHAO, TianFeng, Morris Plains, NJ New Jersey 07950 (US); LI, Huayu, Morris Plains, NJ New Jersey 07950 (US); LIU, Guang, Morris Plains, NJ New Jersey 07950 (US)
(74) Representative: Houghton, Mark Phillip

(57) **Abstract**

Cloud based systems and methods for locating a peace breaker can include a microprocessor receiving a triggering event signal from a sensor indicative of a peace breaker carrying out a peace breaker triggering event, the microprocessor transmitting an activation signal to a first camera to capture a first video data stream or a first image of the peace breaker, the microprocessor receiving the first video data stream or the first image and extracting first identifying information of the peace breaker therefrom, the microprocessor transmitting the first identifying information to a cloud based server device, the cloud based server device comparing the first identifying information with peace breaker information stored in a memory device of the cloud based server device, and the cloud based server device identifying a location of the peace breaker.

## Description

### FIELD

The present invention relates to systems and methods for locating a peace breaker. More particularly, the present invention relates to cloud based systems and methods for locating a peace breaker.

### BACKGROUND

A peace breaker can include an intruder, a stealer, a robber, a killer, an escaped person, and the like. While the peace breaker can be captured by a camera, and a video data stream or an image from the camera can be viewed on a television or a cellular phone, it can still be difficult for police to locate the peace breaker easily and efficiently. For example, the police may only recognize the peace breaker by his clothes or accoutrements, by a picture of the peace breaker, or by other information that requires a human resource to distinguish and confirm. Such systems and methods can be expensive, require expensive human capital, and take precious time during which the peace breaker may be carrying out peace breaking events that could contribute to the loss of life or property.

In view of the above, there is a continuing, ongoing need for improved systems and methods.

### BRIEF DESCRIPTION OF THE DRAWINGS

FIG. 1 is a block diagram of a system in accordance with the herein disclosed invention;
FIG. 2 is a flow diagram of a method in accordance with the disclosed invention; and
FIG. 3 is a block diagram of a system in accordance with the disclosed invention.

### DETAILED DESCRIPTION

While this invention is susceptible of an embodiment in many different forms, there are shown in the drawings and will be described herein in detail specific examples thereof with the understanding that the present disclosure is to be considered as an exemplification of the principles of the invention. It is not intended to limit the invention to the specific illustrated examples.

The Invention disclosed herein can include cloud based systems and methods for locating a peace breaker. For example, a cloud based server device can process and analyze video data streams or images to locate the peace breaker using identifying information of the peace breaker that can be extracted from the video data streams or the images.

In the invention, the cloud based server device can process and analyze the video data streams or the images in which the peace breaker is depicted from a plurality of cameras that capture the video data streams or the images the peace breaker. Furthermore, in the invention, the cloud based server device can receive, process, and analyze the video data streams or the images in real time so as to locate the peace breaker in real time. Further still, in the invention, the plurality of cameras can include IP cameras, smart cameras, loT cameras, mobile phone cameras, or the like.

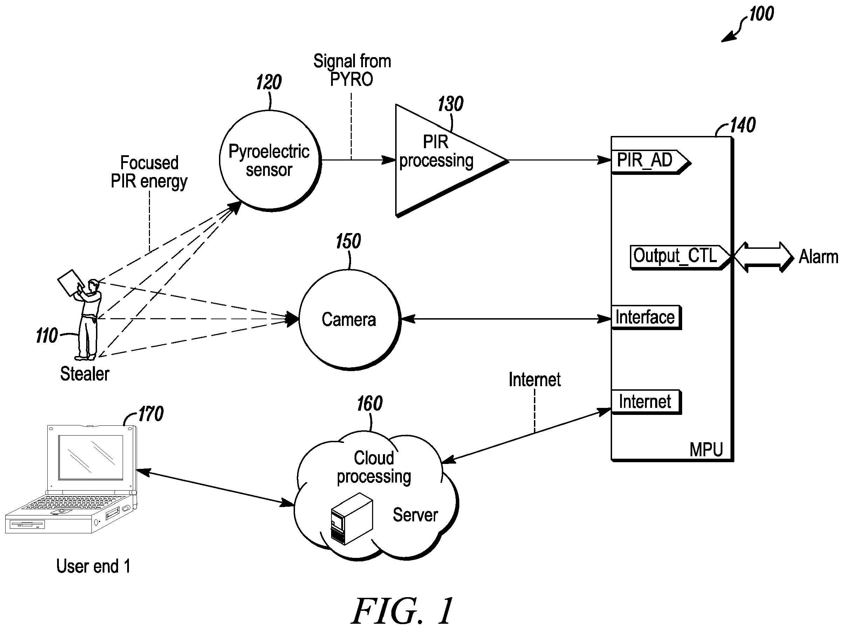

FIG. 1 is a block diagram of a system 100 in accordance with the disclosed invention. As seen in FIG. 1, the system 100 can include a sensor 120, for example a pyroelectric sensor, a microwave sensor, a time-of-flight sensor, or the like, being triggered by a peace breaker 110 carrying out a peace breaker triggering event, such as, for example, intrusion, stealing, robbing, killing, fighting, or the like, and transmitting a corresponding signal to sensor processor circuitry 130. Responsive thereto, the sensor processing circuitry 130 can transmit a corresponding signal to a microprocessor 140, for example, a microprocessor of a control panel device or the like. Responsive thereto, the microprocessor 140 can transmit a corresponding signal to a camera 150 in the vicinity of the sensor 120 to instruct the camera 150 to capture and record a video data stream or an image of the peace breaker 110. The camera 150 can transmit the video data stream or the image to the microprocessor 140, which can extract identifying information of the peace breaker 110 from the video data stream or the image and transmit the identifying information to a cloud based server device 160 via the Internet. As disclosed herein, the cloud based server device 160 can process and analyze the identifying information and transmit a corresponding signal to an end user device 170 responsive thereto.

In the invention, the identifying information of the peace breaker 110 extracted from the video data stream or the image can include, for example, an image of the face of the peace breaker 110, an identification of the eye color of the peace breaker 110, a characteristic of the gait of the peace breaker 110, or the like. When processing and analyzing the identifying information, the cloud based server device 160 can execute a double confirmation analysis by comparing the identifying information with peace breaker information stored on the cloud based server device 160 to identify similarities therein and use such similarities to identify a location of the peace breaker 110. For example, the peace breaker information stored on the cloud based server device 160 can include identifying information extracted from video data streams or images received from other cameras. Furthermore, in the invention, the cloud based server device 160 can use the location of the camera 150 and the location of the other cameras that provided the peace breaker information stored on the cloud based server device 160 to identify the location of the peace breaker 110. In the invention, the cloud based server device 160 can also store the identifying information found in the video data stream or the image from the camera 150 as additional peace breaker information on the cloud based server device 160.

As seen in FIG. 1, the microprocessor 140 can transmit an alarm signal. In the invention, the microprocessor 140 can transmit the alarm signal responsive to the signal from the sensor processing circuitry 130. However, in the invention, the microprocessor 140 can transmit the alarm signal responsive to both the signal from the sensor processing circuitry 130 and the video data stream or the image from the camera 150 to confirm a presence of the peace breaker 110. Still further, the microprocessor 140 can transmit the alarm signal responsive to all of the signal from the sensor processing circuitry 130, the video data stream or the image from the camera 150, and a signal from the cloud based server device 160 to confirm the other cameras capturing the peace breaker 110.

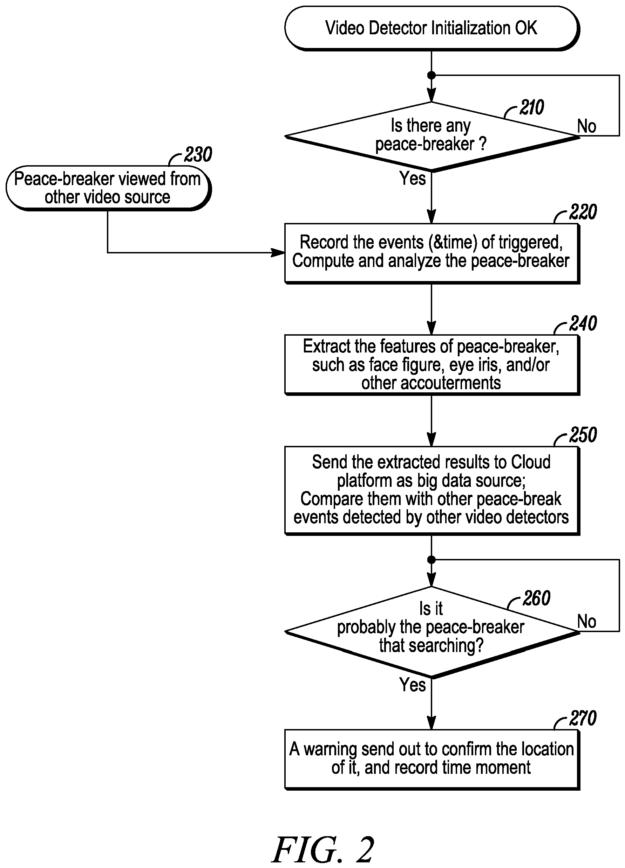

FIG. 2 is a flow diagram of a method 200 in accordance with the disclosed invention. As seen in FIG. 2, the method 200 can include determining whether a peace breaker triggering event has been detected as in 210. If so, then the method 200 can include instructing a camera to record a video data stream or an image and a time of the peace breaker triggering event as in 220 and optionally receiving a video data stream or an image of the peace breaker triggering event from another video source as in 230. Then, the method 200 can include extracting identifying information of a peace breaker from the video data stream or the image as in 240 and transmitting the identifying information of the peace breaker to a cloud based server device, which can compare the identifying information with other peace breaker information that is received from other cameras and that is stored on the cloud based server device as in 250. Responsive to the comparing as in 250, the method 200 can include determining whether the peace breaker is the peace breaker sought as opposed to a new, other, or non-relevant peace breaker as in 260. If so, then the method 200 can include transmitting a warning signal that identifies a location of the peace breaker as in 270.

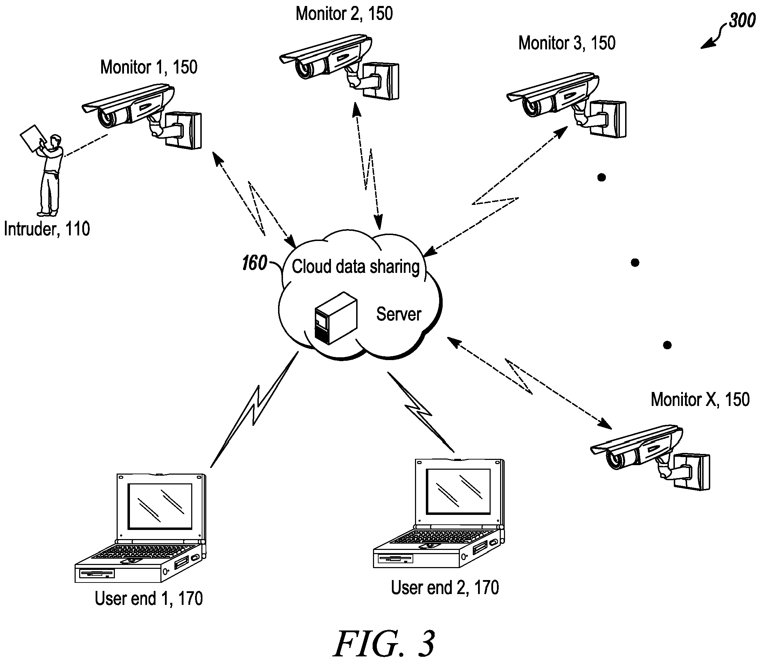

As explained above, the peace breaker information stored on the cloud based server device 160 can include identifying information found in video data streams or images received from other cameras, and the cloud based server device 160 can use the location of the camera 150 that provided the identifying information and the location of the other cameras that provided the peace breaker information stored on the cloud based server device 160 to identify the location of the peace breaker 110. In this regard, FIG. 3 is a block diagram of a system 300 in accordance with the disclosed invention. As seen in FIG. 3, the system 300 can include a plurality of cameras 150 in communication with the cloud based server device 160 that can share identifying information from respective video data streams or images with the cloud based server device 160 either directly or via respective microprocessors.

As further seen in FIG. 3, the system 300 can include a plurality of end user devices 170 in communication with the cloud based server device 160. In the invention, each of the plurality of user devices 170 can include a personal camera, a cellular phone, a tablet, or the like. Furthermore, in the invention, each of the plurality of end user devices 170 can capture a video data stream or an image of the peace breaker 110 and can transmit the video data stream or the image to the cloud based server device 160 for storage of identifying information found therein as additional peace breaker information on the cloud based server device 160.

It is to be understood that each of the microprocessor 140 and the cloud based server device 160 disclosed herein can include a respective transceiver device and a respective memory device each of which can be in communication with respective control circuitry, a respective programmable processor, and respective executable control software as would be understood by one of ordinary skill in the art. The respective executable control software can be stored on a transitory or non-transitory computer readable medium, including, but not limited to local computer memory, RAM, optical storage media, magnetic storage media, flash memory, and the like. In the invention, the respective transceiver device can receive the video data streams, the images, or the identifying information disclosed herein, and in the invention, the respective memory device can store the peace breaker information as disclosed herein. Furthermore, in the invention, some or all of the respective control circuitry, the respective programmable processor, and the respective executable control software can execute and control at least some of the methods disclosed herein.

Although a few embodiments have been described in detail above, other modifications are possible. For example, the logic flows described above do not require the particular order described or sequential order to achieve desirable results. Other steps may be provided, steps may be eliminated from the described flows, and other components may be added to or removed from the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.
The numbered paragraphs below form part of the disclosure, wherein the numbers refer to the paragraphs:
1. A method comprising:
   a microprocessor receiving a triggering event signal from a sensor indicative of a peace breaker carrying out a peace breaker triggering event;
   responsive to the triggering event, the microprocessor transmitting an activation signal to a first camera to capture a first video data stream or a first image of the peace breaker;
   the microprocessor receiving the first video data stream or the first image and extracting first identifying information of the peace breaker therefrom;
   the microprocessor transmitting the first identifying information to a cloud based server device;
   the cloud based server device comparing the first identifying information with peace breaker information stored in a memory device of the cloud based server device; and
   responsive to the comparing, the cloud based server device identifying a location of the peace breaker.
2. The method of 1 wherein the first camera includes an IP camera, a smart camera, an loT camera, or a mobile phone camera.
3. The method of 1 or 2 wherein the sensor includes a pyroelectric sensor, a microwave sensor, or a time-of-flight sensor.
4. The method of 1, 2 or 3 wherein the microprocessor transmits the activation signal to the first camera within a predetermined distance from the sensor.
5. The method of any of 1 to 4 wherein the first identifying information includes an image of a face of the peace breaker, an identification of eye color of the peace breaker, or an identification of a characteristic of a gait of the peace breaker.
6. The method of any of 1 to 5 wherein the cloud based server device comparing the first identifying information with the peace breaker information includes the cloud based server identifying similarities between the first identifying information and the peace breaker information.
7. The method of 6 further comprising the cloud based server device using the similarities to identify the location of the peace breaker.
8. The method of any of 1 to 7 wherein the peace breaker information includes other identifying information extracted from other video data streams or other images from other cameras.
9. The method of 8 further comprising the cloud based server device using positions of the first camera and the other cameras to identify the location of the peace breaker.
10. The method of any of 1 to 9 further comprising the cloud based server device storing the first identifying information with the peace breaker information in the memory device.
11. A system comprising:
   a microprocessor; and
   a cloud based server device,
   wherein the microprocessor receives a triggering event signal from a sensor indicative of a peace breaker carrying out a peace breaker triggering event,
   wherein, responsive to the triggering event, the microprocessor transmits an activation signal to a first camera to capture a first video data stream or a first image of the peace breaker,
   wherein the microprocessor receives the first video data stream or the first image and extracts first identifying information of the peace breaker therefrom,
   wherein the microprocessor transmits the first identifying information from a cloud based server device,
   wherein the cloud based server device compares the first identifying information with peace breaker information stored in a memory device of the cloud based server device, and
   wherein, responsive to the comparing, the cloud based server device identifies a location of the peace breaker.
12. The system of 11 wherein the first camera includes an IP camera, a smart camera, an loT camera, or a mobile phone camera.
13. The system of 11 or 12 wherein the sensor includes a pyroelectric sensor, a microwave sensor, or a time-of-flight sensor.
14. The system of any of 11 to 13 wherein the microprocessor transmits the activation signal to the first camera within a predetermined distance from the sensor.
15. The system of any of 11 to 14 wherein the first identifying information includes an image of a face of the peace breaker, an identification of eye color of the peace breaker, or an identification of a characteristic of a gait of the peace breaker.
16. The system of any of 11 to 15 wherein the cloud based server device identifies similarities between the first identifying information and the peace breaker information.
17. The system of 16 wherein the cloud based server device uses the similarities to identify the location of the peace breaker.
18. The system of any of 11 to 17 wherein the peace breaker information includes other identifying information extracted from other video data streams or other images from other cameras.
19. The system of 18 wherein the cloud based server device uses positions of the first camera and the other cameras to identify the location of the peace breaker.
20. The system of any of 11 to 19 wherein the cloud based server device stores the first identifying information with the peace breaker information in the memory device.

## Claims

1. A method comprising:
a microprocessor receiving a triggering event signal from a sensor indicative of a peace breaker carrying out a peace breaker triggering event;
responsive to the triggering event, the microprocessor transmitting an activation signal to a first camera to capture a first video data stream or a first image of the peace breaker;
the microprocessor receiving the first video data stream or the first image and extracting first identifying information of the peace breaker therefrom;
the microprocessor transmitting the first identifying information to a cloud based server device;
the cloud based server device comparing the first identifying information with peace breaker information stored in a memory device of the cloud based server device; and
responsive to the comparing, the cloud based server device identifying a location of the peace breaker.

2. The method of claim 1 wherein the first camera includes an IP camera, a smart camera, an IoT camera, or a mobile phone camera.

3. The method of claim 1 or claim 2 wherein the sensor includes a pyroelectric sensor, a microwave sensor, or a time-of-flight sensor.

4. The method of any of claims 1 to 3 wherein the microprocessor transmits the activation signal to the first camera within a predetermined distance from the sensor.

5. The method of any of claims 1 to 4 wherein the first identifying information includes an image of a face of the peace breaker, an identification of eye color of the peace breaker, or an identification of a characteristic of a gait of the peace breaker.

6. The method of any of claims 1 to 5 wherein the cloud based server device comparing the first identifying information with the peace breaker information includes the cloud based server identifying similarities between the first identifying information and the peace breaker information.

7. The method of claim 6 further comprising the cloud based server device using the similarities to identify the location of the peace breaker.

8. The method of any of claims 1 to 7 wherein the peace breaker information includes other identifying information extracted from other video data streams or other images from other cameras.

9. The method of claim 8 further comprising the cloud based server device using positions of the first camera and the other cameras to identify the location of the peace breaker.

10. The method of any of claims 1 to 9 further comprising the cloud based server device storing the first identifying information with the peace breaker information in the memory device.

11. A system comprising:
a microprocessor; and
a cloud based server device,
wherein the microprocessor receives a triggering event signal from a sensor indicative of a peace breaker carrying out a peace breaker triggering event,
wherein, responsive to the triggering event, the microprocessor transmits an activation signal to a first camera to capture a first video data stream or a first image of the peace breaker,
wherein the microprocessor receives the first video data stream or the first image and extracts first identifying information of the peace breaker therefrom,
wherein the microprocessor transmits the first identifying information from a cloud based server device,
wherein the cloud based server device compares the first identifying information with peace breaker information stored in a memory device of the cloud based server device, and
wherein, responsive to the comparing, the cloud based server device identifies a location of the peace breaker.

12. The system of claim 11 wherein the first camera includes an IP camera, a smart camera, an loT camera, or a mobile phone camera.

13. The system of claim 11 or claim 12 wherein the sensor includes a pyroelectric sensor, a microwave sensor, or a time-of-flight sensor.

14. The system of any of claims 11 to 13 wherein the microprocessor transmits the activation signal to the first camera within a predetermined distance from the sensor.

15. The system of any of claims 11 to 14 wherein the first identifying information includes an image of a face of the peace breaker, an identification of eye color of the peace breaker, or an identification of a characteristic of a gait of the peace breaker.

## Amended claims

### Amended claims in accordance with Rule 137(2) EPC.

1. A method comprising:
a microprocessor receiving a triggering event signal from a sensor indicative of a peace breaker carrying out a peace breaker triggering event;
responsive to the triggering event signal, the microprocessor transmitting an activation signal to a first camera to capture a first video data stream or a first image of the peace breaker;
the microprocessor receiving the first video data stream or the first image and extracting first identifying information of the peace breaker therefrom;
the microprocessor transmitting the first identifying information to a cloud based server device;
the cloud based server device comparing the first identifying information with peace breaker information stored in a memory device of the cloud based server device; and
responsive to the comparing, the cloud based server device using a first location of the first camera and other locations of other cameras that provided the peace breaker information stored in the memory device to identify a location of the peace breaker.

2. The method of claim 1 wherein the first camera includes an IP camera, a smart camera, an IoT camera, or a mobile phone camera.

3. The method of claim 1 or claim 2 wherein the sensor includes a pyroelectric sensor, a microwave sensor, or a time-of-flight sensor.

4. The method of any of claims 1 to 3 wherein the microprocessor transmits the activation signal to the first camera within a predetermined distance from the sensor.

5. The method of any of claims 1 to 4 wherein the first identifying information includes an image of a face of the peace breaker, an identification of eye color of the peace breaker, or an identification of a characteristic of a gait of the peace breaker.

6. The method of any of claims 1 to 5 wherein the cloud based server device comparing the first identifying information with the peace breaker information includes the cloud based server identifying similarities between the first identifying information and the peace breaker information.

7. The method of claim 6 further comprising the cloud based server device using the similarities to identify the location of the peace breaker.

8. The method of any of claims 1 to 7 wherein the peace breaker information includes other identifying information extracted from other video data streams or other images from the other cameras.

9. The method of any of claims 1 to 8 further comprising the cloud based server device storing the first identifying information with the peace breaker information in the memory device.

10. A system comprising:
a microprocessor; and
a cloud based server device,
wherein the microprocessor receives a triggering event signal from a sensor indicative of a peace breaker carrying out a peace breaker triggering event,
wherein, responsive to the triggering event signal, the microprocessor transmits an activation signal to a first camera to capture a first video data stream or a first image of the peace breaker,
wherein the microprocessor receives the first video data stream or the first image and extracts first identifying information of the peace breaker therefrom,
wherein the microprocessor transmits the first identifying information from a cloud based server device,
wherein the cloud based server device compares the first identifying information with peace breaker information stored in a memory device of the cloud based server device, and
wherein, responsive to comparing, the cloud based server device uses a first location of the first camera and other locations of other cameras that provided the peace breaker information stored in the memory device to identify a location of the peace breaker.

11. The system of claim 11 wherein the first camera includes an IP camera, a smart camera, an IoT camera, or a mobile phone camera.

12. The system of claim 11 or claim 12 wherein the sensor includes a pyroelectric sensor, a microwave sensor, or a time-of-flight sensor.

13. The system of any of claims 11 to 13 wherein the microprocessor transmits the activation signal to the first camera within a predetermined distance from the sensor.

14. The system of any of claims 11 to 14 wherein the first identifying information includes an image of a face of the peace breaker, an identification of eye color of the peace breaker, or an identification of a characteristic of a gait of the peace breaker.
